**Europäisches Patentamt**

**European Patent Office**

**Office européen des brevets**

(11) Veröffentlichungsnummer: **0 185 219**
**B1**

## EUROPÄISCHE PATENTSCHRIFT

(45) Veröffentlichungstag der Patentschrift:
**04.01.89**

(21) Anmeldenummer: **85114895.7**

(22) Anmeldetag: **25.11.85**

(51) Int. Cl.⁴: **G 21 C 3/00, G 21 C 15/00**

(54) **Kernreaktorbrennelement.**

(30) Priorität: **07.12.84 DE 3444771**

(43) Veröffentlichungstag der Anmeldung:
**25.06.86 Patentblatt 86/26**

(45) Bekanntmachung des Hinweises auf die Patenterteilung:
**04.01.89 Patentblatt 89/1**

(84) Benannte Vertragsstaaten:
**BE DE FR SE**

(56) Entgegenhaltungen:
**FR-A-1 434 932**
**FR-A-2 169 140**
**GB-A-1 105 238**
**US-A-3 033 773**
**US-A-3 764 470**

(73) Patentinhaber: **Siemens Aktiengesellschaft Berlin und München, Wittelsbacherplatz 2, D-8000 München 2 (DE)**

(72) Erfinder: **Steinke, Alexander, Stettinger Strasse 13, D-8553 Ebermannstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

EP 0 185 219 B1

**Beschreibung**

Die Erfindung betrifft ein Kernreaktorbrennelement mit Kernbrennstoff enthaltenden, zueinander parallelen Brennstäben und zwei in Längsrichtung der Brennstäbe nebeneinander angeordneten Gittern, die hochkant stehende, sich rechtwinklig durchsetzende Blechstege aufweisen, welche Maschen für jeweils einen der Brennstäbe bilden.

Ein solches Kernreaktorbrennelement ist bereits üblich. In einem Kernreaktor, z. B. Druckwasserkernreaktor, eingesetzt heizt es jedoch über seinen Querschnitt gesehen das Kühlmittel im Kernreaktor ungleichmäßig auf. Im Kernreaktor bilden sich also im Kernreaktorbrennelement kältere und heißere Kühlmittelströmungsfäden, so daß unter Umständen gerade die am stärksten aufgeheizten und damit am stärksten belasteten Brennstäbe nicht genügend gekalt werden.

Es sind daher auch Kernreaktorbrennelemente üblich mit sogenannten Verwirbelungsfahnen, die sich an Durchsetzungsstellen von jeweils zwei rechtwinkligen Blechstegen am Austrittsquerschnitt des Gitters befinden. Diese Verwirbelungsfahnen sind mit einen Ende an einem der beiden sich durchsetzenden Blechstege befestigt, ferner sind sie längsgeschlitzt und am Längsschlitz gespreizt. Diese Verwirbelungsfahnen lenken das Kühlmittel um, das zwischen den vier Brennstäben strömt, die sich in den vier Maschen an der Durchsetzungsstelle des Gitters mit der jeweiligen Verwirbelungsfahne befinden. Zur weiteren Vergleichmäßigung der Kühlmitteltemperatur über den Querschnitt des Kernreaktorbrennelementes kann zwar durch eine Verdrillung der Verwirbelungsfahnen um ihre Längsrichtung eine Schraubenströmung des Kühlmittels ausgebildet werden, die mechanische Belastung solcher verdrillten Verwirbelungsfahnen durch die Reaktionskräfte zur Kühlmittelströmung ist jedoch so stark, daß sie zu einem Abbrechen der Verwirbelungsfahnen vom Gitter führen kann.

Der Erfindung liegt die Aufgabe zugrunde, hier Abhilfe zu schaffen und die Ausbildung einer möglichst langen Schraubenströmung des Kühlmittels innerhalb des Kernreaktorbrennelementes im Kernreaktor zu ermöglichen und zugleich ch die Stabilität der Gitter des Kernreaktorbrennelementes gegen Reaktionskräfte zu solchen langen Schraubenströmungen zu verbessern.

Zur Lösung dieser Aufgabe ist ein Kernreaktorbrennelement der eingangs erwähten Art erfindungsgemäß dadurch gekennzeichnet, daß an zwei in Längsrichtung der Brennstäbe nebeneinander befindlichen Kreuzungsstellen zweier Blechstege der beiden Gitter jeweils ein Ende eines zu den Brennstäben parallelen langgestreckten Blechstreifens befestigt ist, der um seine Längsachse verdrillt ist.

Da die langgestreckten, verdrillten Blechstreifen an beiden Enden durch ein Gitter am Kernreaktorbrennelement gehalten sind, können sie den Reaktionskräften zu den Schraubenströmungen besser widerstehen. Deshalb können diese verdrillten Blechstreifen auch verhältnismäßig lang ausgeführt sein, so daß dem Kühlmittel am Austrittsgitter der Kühlmittelströmung ein ganz erheblicher Drall verliehen wird und sich auch eine besonders lange Schraubenströmung des Kühlmittels nach seinem Austritt aus dem Austrittsgitter ausbildet. Dies hat zur Folge, daß die Kühlmittelströmungsfäden innerhalb des Kernreaktorbrennelementes im Kernreaktor noch besser miteinander vermischt werden und die Kühlmitteltemperatur über den Querschnitt des Kernreaktorbrennelementes noch mehr vergleichmäßigt wird. Dadurch sind die Voraussetzungen für Leistungserhöhungen der Brennstäbe des Kernreaktorbrennelementes im Kernreaktor verbessert. Wegen der vergleichmäßigten Kühlmitteltemperatur ist auch die Oxidbildung auf der Außenfläche der Hüllrohre der Brennstäbe während der Betriebszeiten im Kernreaktor verringert.

Die Montage des Kernreaktorbrennelementes gestaltet sich besonders einfach, wenn in vorteilhafter Weise der langgestreckte Blechstreifen an seinen beiden Enden einen Längsschlitz aufweist, in dem jeweils die beiden sich kreuzenden Blechstege eines der beiden Gitter angeordnet sind.

Ferner ist es für die mechanische Stabilität des langgestreckten Blechstreifens gegen die Reaktionskräfte der Schraubenströmung innerhalb des Kernreaktorbrennelementes günstig, wenn der langgestreckte Blechstreifen an seinen beiden Enden so an den Seitenflächen des gleichen Blechsteges anliegt, daß er durch eine entgegen seinem Verdrillungssinn gerichtete Kraft beiderseits des Längsschlitzes gegen diesen Blechsteg gepreßt wird.

Die Erfindung und ihre Vorteile seien anhand der Zeichnung an einem Ausführungsbeispiel näher erläutert:

Fig. 1    zeigt in Seitenansicht und stark schematisiert ein Kernreaktorbrennelement für einen Druckwasserkernreaktor.

Fig. 2    zeigt in Seitenansicht ein Gitter im Kernreaktorbrennelement nach Fig. 1.

Fig. 3    zeigt eine Draufsicht auf das Gitter nach Fig. 2.

Fig. 4    zeigt etwas verkleinert und in Draufsicht die zwei Gitter nach den Fig. 2 und 3 als Einzelteile.

Fig. 5    zeigt einen Längsschnitt entsprechend der strichpunktierten Linie V - V durch die beiden Gitter entsprechend Fig. 4.

Fig. 6    zeigen in Drauf- bzw. Unteransicht zwei Stellen

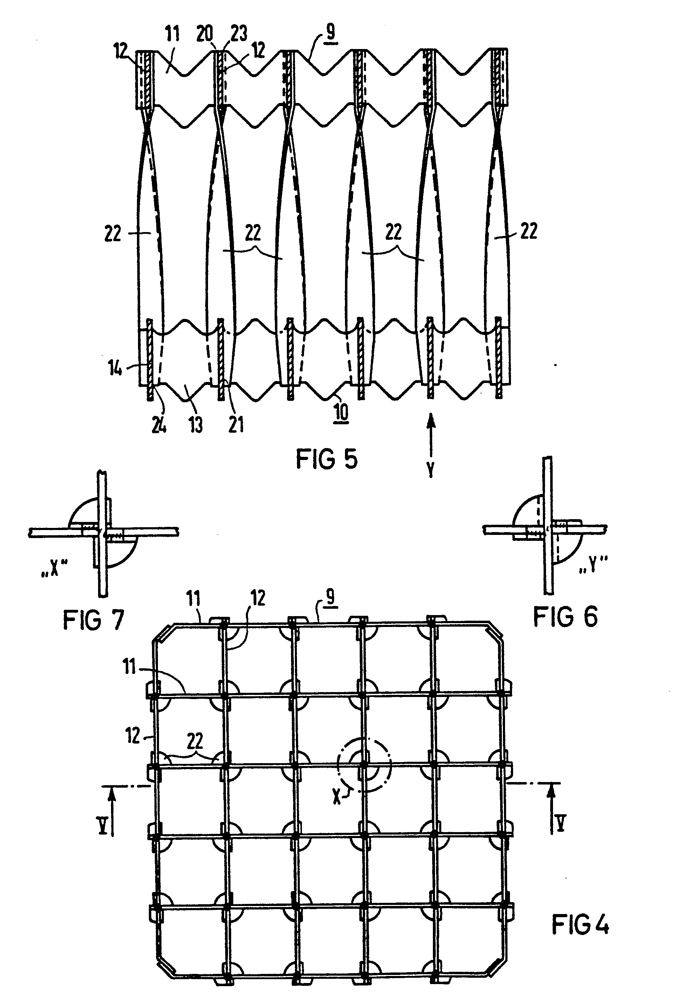

und 7    der beiden Gitter nach den Fig. 4 und 5.

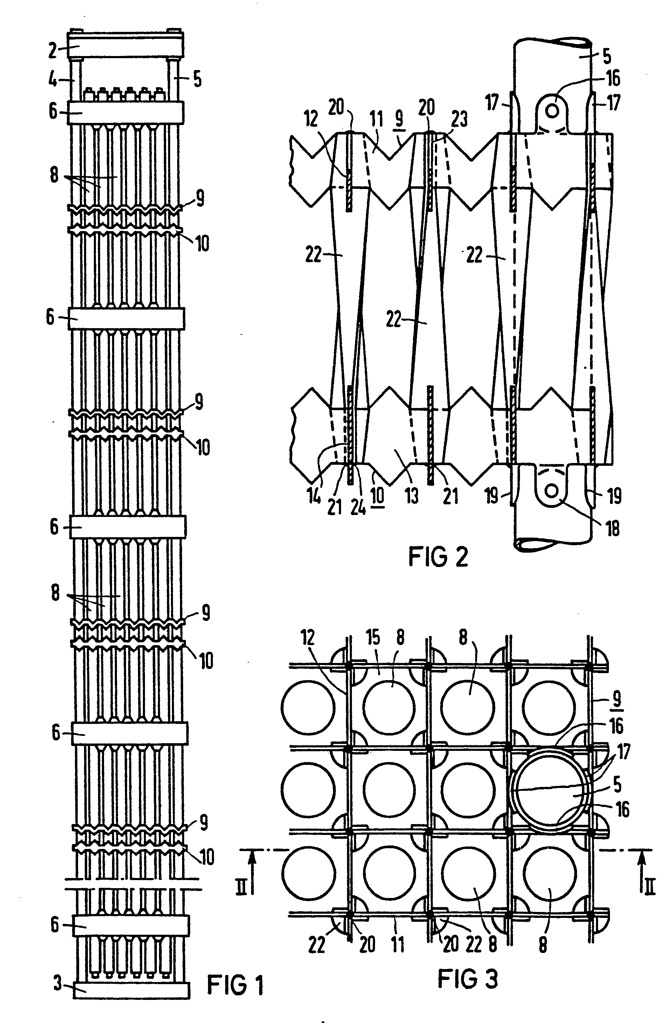

Das Kernreaktorbrennelement nach Fig. 1 ist for einen Druckwasserkernreaktor bestimmt und weist zwei quadratische Halteplatten 2 und 3 aus Metall auf. Ferner sind zwei zueinander parallele Haltestäbe 4 und 5, z. B. Steuerstabführungsrohre, aus Metall erkennbar, deren Längsachsen die beiden zueinander parallelen Halteplatten 2 und 3 in einem Winkel von 900 durchdringen und die an jedem Ende jeweils an einer der beiden Halteplatten 2 und 3 festgeschrubt sind. Jeder der beiden Haltestäbe 4 und 5 ist durch eine quadratische Masche in quadratischen gitterförmigen Abstandhaltern 6 aus Metall geführt, die sich in Längsrichtung der Haltestäbe 4 und 5 gesehen zwischen den beiden Halteplatten 2 und 3 befinden und die an den Haltestäben 4 und 5 formschlüssig gehaltert sind. Durch andere Maschen der Abstandhalter 6 ist jeweils ein zu den Haltestäben 4 und 5 paralleler Brennstab 8 geführt, der im wesentlichen aus einem mit Kernbrennstoff gefüllten Hüllrohr aus Metall besteht, das an beiden Enden gasdicht verschlossen ist. Die Brennstäbe 8 sind an keiner der beiden Halteplatten 2 und 3 befestigt, sondern sie sind in den Maschen der Abstandhalter 6 elastisch d. h. kraftschlüssig durch nicht erkennbare Moppen und Federn der Abstandhalter 6 gehalten und haben zwischen den beiden Halteplatten 2 und 3 in Richtung ihrer Längsachse Spiel. Sie können sich deshalb in ihrer Längsrichtung d. h. in Längsrichtung des Kernreaktorbrennelementes ungehindert ausdehnen.

Jeweils zwischen zwei Abstandhaltern 6 weist das Kernreaktorbrennelenent zwei in Längsrichtung der Brennstäbe 8 mit Abstand nebeneinander angeordnete quadratische Gitter 9 und 10 auf mit hochkant stehenden, sich rechtwinklig durchsetzenden Blechstegen 11 und 12 bzw. 13 und 14, welche quadratische Maschen bilden, in denen sich jeweils einer der Brennstäbe 8 bzw. einer der Haltestäbe 4 und 5 befindet. In Fig. 3 sind die Maschen 15 des Gitters 9 erkennbar.

Während die Brennstäbe 8 mit Abstand von den Blechstegen 11 bis 14 d. h. also lose durch die raschen der Gitter 9 und 10 geführt sind, berühren die Haltestäbe 4 und 5 diese Blechstege, die jeweils eine an einer Kante quer den Haltestäben 4 und 5 angeformte Zunge 16 bis 19 aufweisen, mit der die Blechstege außen an den Haltestäben 4 und 5 festgeschweißt sind. In Fig. 2 sind die am Haltestab 5 festgeschweißten Zungen 16 bis 19 erkennbar.

An in Längsrichtung der Brennstäbe 8 und der Haltestäbe 4 und 5 auf zu den Längsachsen dieser Stäbe parallelen Achsen liegenden Kreuzungsstellen 20 und 21 jeweils zweier Blechstege 11 und 12 des Gitters 9 und 13 und 14 des Gitters 10 ist jeweils ein Ende eines zu den Brennstäben 8 und den Haltestäben 4 und 5 parallelen, langgestreckten Blechstreifen 22 befestigt. Diese Blechstreifen 22 sind um ihre zu den Längsachsen der Brennstäbe 8 und der Haltestäbe 4 und 5 parallelen Längsachsen verdrillt und bilden so eine Art Schraubengang für ein das Kernreaktorbrennelement in dessen Längsrichtung d. h. in Längsrichtung der Brennstäbe 8 und der Haltestäbe 4 und 5 durchstömendes Kühlmittel in einem Druckwasserkernreaktor.

Wie die Fig. 4 bis 7 besonders deutlich zeigen, hat jeder der langgestreckten Blechstreifen 22 an seinen beiden Enden in der Mitte einen Längsschlitz 23 bzw. 24. Im Längsschlitz 23 sind zwei sich kreuzende Blechstege 11 und 12 des Gitters 9 und im Längsschlitz 24 zwei sich kreuzende Blechstege 13 und 14 des Gitters 10 angeordnet. Zwei Blechstreifen 22, die am Blechsteg 11 des Gitters 9 und am Blechsteg 13 des Gitters 10 unmittelbar benachbart angebracht sind, sind vorteilhafterweise gegensinnig verdrillt. Das gleiche gilt für zwei langgestreckte Blechstreifen 22, die an einem die Blechstege 11 rechtwinklig durchsetzenden Blechsteg 12 des Gitters 9 und an einem die Blechstege 13 rechtwinklig durchsetzenden Blechsteg 14 des Gitters 10 unmittelbar benachbart nebeneinander angebracht sind. Hierdurch werden im das Kernreaktorbrennelement in Längsrichtung durchströmenden Kühlmittel gegenläufige Wirbel erzeugt, die kühleres Kühlmittel nach außen in die Spalte zwischen zwei Brennstäben 8 befördern und von dort heißes Kühlmittel mit höherem Dampfgehalt in das Zentrum des Wirbels saugen und in Strömungsrichtung des Kühlmittels befördern.

Die Blechstege 11 und 12 des Gitters 9 und die Blechstege 13 und 14 des Gitters 10 können an den Kreuzungsstellen 20 bzw. 21 hochkant ineinander gesteckt und miteinander verschweißt sein. Ein Blechstreifen 22, der beiderseits eines Längsschlitzes 23 flach an einem Blechsteg des Gitters 9 anliegt, liegt an seinem anderen Ende beiderseits des dort befindlichen Längsschlitzes 24 flach an einem Blechsteg des Gitters 10 an, welcher rechtwinklig zum Blechsteg des Gitters 9 ist, an dem dieser Blechstreifen 22 flach anliegt. Außerdem werden die Blechstege 22 mit ihren Anlageflächen an den Stegen der Gitter 9 und 10, an denen die festgeschweißt sind, durch eine entgegen dem Verdrillsinn des jeweiligen Blechstreifens 22 gerichtete Kraft gegen den jeweiligen Blechsteg gepreßt, so daß dieser Blechsteg vom jeweiligen Blechstreifen 22 ausgehende Reaktionsdruckkräfte aufnehmen kann, die auftreten, wenn die verdrillten Blechstreifen 22 dem sie durchströmenden Kühlmittel eine Strömungsrichtung in Längsrichtung des Kernraktorbrennelementes geben und einen Drall verleihen, mit dem das Kühlmittel die verdrillten Blechstreifen 22 verläßt.

**Patentansprüche**

1. Kernreaktorbrennelement mit Kernbrennstoff enthaltenden, zueinander parallelen Brennstäben und zwei in Längsrichtung der Brennstäbe nebeneinander angeordneten Gittern, die hochkant stehende, sich rechtwinklig durchsetzende Blechstege aufweisen, welche Maschen für jeweils einen der Brennstäbe bilden, dadurch gekennzeichnet, daß an zwei in Längsrichtung der Brennstäbe (8) nebeneinander befindlichen Kreuzungsstellen (20, 21) zweier Blechstege (11, 12; 13, 14) der beiden Gitter (9, 10) jeweils ein Ende eines zu den Brennstäben (8) parallelen, langgestreckten Blechstreifens (22) befestigt ist, der um seine Längsachse verdrillt ist.

2. Kernreaktorbrennelement nach Anspruch 1, dadurch gekennzeichnet, daß der langgestreckte Blechstreifen (22) an seinen beide Enden einen Längsschlitz (23; 24) aufweist, in dem jeweils die beiden sich kreuzenden Blechstege (11, 12; 13, 14) eines der beiden Gitter (9, 10) angeordnet sind.

3. Kernreaktorbrennelement nach Anspruch 1, dadurch gekennzeichnet, daß zwei langgestreckte Blechstreifen (22), die an einem Blechsteg (11, 12; 13, 14) der beiden Gitter (9, 10) unmittelbar benachbart angebracht sind, gegensinnig verdrillt sind.

4. Kernreaktorbrennelement nach Anspruch 2, dadurch gekennzeichnet, daß der langgestreckte Blechstreifen (22) an seinen beiden Enden so an den Seitenflächen des gleichen Blechsteges (11, 12; 13, 14) anliegt, daß er durch eine entgegen seinem Verdrillsinn gerichtete Kraft beiderseits des Längsschlitzes (23; 24) gegen diesen Blechsteg (11, 12; 13, 14) gepreßt wird.

## Claims

1. Nuclear reactor fuel element having fuel rods, which contain nuclear fuel and are parallel to each other, and two grids which are arranged side by side in the longitudinal direction of the fuel rods and which have upright sheet-metal bars, which pass through at right angles and form meshes for, in each case, one of the fuel rods, characterized in that secured to two intersections (20, 21) of two sheet-metal bars (11, 12; 13, 14) of the two grids (9, 10), which intersections are located side by side in the longitudinal direction of the fuel rods (8), there is, in each case, one end of an extended sheet-metal strip (22) which is parallel to the fuel rods (8) and which is twisted about its longitudinal axis.

2. Nuclear reactor fuel element according to claim 1, characterised in that the extended sheet-metal strip (22) has, at both of its ends, a longitudinal slot (23; 24) in which there are arranged, in each case, the two intersecting sheet-metal bars (11, 12; 13, 14) of one of the two grids (9, 10).

3. Nuclear reactor fuel element according to claim 1, characterized in that two extended sheet-metal strips (22), which are provided, in a directly adjacent manner, on a sheet-metal bar (11, 12; 13, 14) of the two grids (9, 10), are mutually twisted.

4. Nuclear reactor fuel element according to claim 2, characterised in that the extended sheet-metal strip (22), at both of its ends, rests against the side faces of the same sheet-metal bar (11, 12; 13, 14) such that it is pressed by a force, which is directed in opposition to its direction of twisting, on both sides of the longitudinal slot (23; 24), against this sheet-metal bar (11, 12; 13, 14).

## Revendications

1. Assemblage combustible de réacteur nucléaire, comprenant des crayons combustibles parallèles et contenant de la matière combustible nucléaire et deux grilles disposées l'une à côté de l'autre dans la direction longitudinale des crayons combustibles et comportant des lames de tôle, qui sont sur chant, qui s'entrecroisent à angle droit et qui forment des mailles respectivement pour les crayons combustibles, caractérisé en ce qu'en deux points de croisement (20, 21) de deux lames de tôle (11, 12; 13, 14) des deux grilles (9, 10), qui sont l'un à côté de l'autre, est fixée une extrémité d'une bande de tôle (22), qui s'étend en longueur parallèlement aux crayons combustibles (8) et qui est vrillée autour de son axe longitudinal.

2. Assemblage combustible de réacteur nucléaire suivant la revendication 1, caractérisé en ce que la bande de tôle (22), qui s'étend en longueur, comporte, à ses deux extrémités, une fente longitudinale (23; 24) dans laquelle sont montées les deux lames de tôle (11, 12; 13, 14) qui se croisent de l'une des deux grilles (9, 10).

3. Assemblage combustible de réacteur nucléaire suivant la revendication 1, caractérisé en ce que deux bandes de tôle (22), qui s'étendent en longueur, et qui sont montées sur une lame de tôle (11, 12; 13, 14) des deux grilles (9, 10), en étant directement voisines, sont vrillées en sens opposé.

4. Assemblage combustible de réacteur nucléaire suivant la revendication 2, caractérisé en ce que la bande de tôle (22), qui s'étend en longueur, s'applique, par ses deux extrémités, sur les surfaces latérales de la même lame de tôle (11, 12; 13, 14), de façon à être repoussée de part et d'autre de la fente longitudinale (23; 24), contre cette lame de tôle (11, 12; 13, 14), par une force dirigée dans le sens inverse de son sens de vrillage.

FIG 1

FIG 2

FIG 3

FIG 5

"X"

FIG 7

FIG 6

"Y"

FIG 4